# EUROPÄISCHE PATENTSCHRIFT

(11) **EP 0 575 932 B1**
(45) Veröffentlichungstag und Bekanntmachung des Hinweises auf die Patenterteilung: **30.10.1996**
(21) Anmeldenummer: 93109862.8
(22) Anmeldetag: 21.06.1993
(51) Int. Cl.: H02B 13/065, H02H 1/00

(54) **Einrichtung zur Erkennung von Störlichtbögen, insbesondere zur Erkennung an Sammelschienenanordnungen in Niederspannungs-Schaltanlagen**
Detecting device for fault arcs, in particular for their detection on bus bar arrangements in low-voltage switch gears
Dispositif de détection pour des arcs de défaut, en particulier pour leur détection dans les dispositifs de barres omnibus des installations de commutation à basse tension

(30) Priorität: 23.06.1992 DE 9208363 U; 21.09.1992 DE 9212672 U
(43) Veröffentlichungstag der Anmeldung: 29.12.1993
(73) Patentinhaber: Klöckner-Moeller GmbH, 53115 Bonn (DE)
(72) Erfinder: Schäfer, Helge,Dipl.-Ing., D-98693 Ilmenau (DE); Grey, Andreas,Dipl.-Ing., D-98711 Schmiedefeld (DE); Heinze, Klaus,Dipl.-Ing., D-98693 Ilmenau (DE); Schau, Holher,Dr.-Ing., D-99448 Kranichfeld (DE); Boros, Ferenc, D-53819 Neunkirchen-Seelscheid (DE); Wey, Paul,Dipl.-Ing., D-53111 Bonn (DE); Herkenrath, Manfred,Dipl.-Ing., D-53721 Siegburg (DE); Stade, Dietrich,Prof.-Ing. habil., D-98693 Ilmenau (DE)

(56) Entgegenhaltungen:
- DD-A- 271 397
- DE-A- 2 111 463
- US-A- 2 224 320
- DATABASE WPI Section EI, Week 8124, Derwent Publications Ltd., London, GB; Class X13, AN 81-F5199D & SU-A-760 230

## Beschreibung

Die Erfindung betrifft eine Einrichtung zur Erkennung von Störlichtbögen, insbesondere zur Erkennung an Sammelschienenanordnungen in Niederspannungs-Schaltanlagen.

In Niederspannungs-Schaltanlagen kann es durch immer höhere Leistungsdichten, Fehlschaltungen, Fehlhandlungen des Bedienpersonals, Überspannungen oder Geräteversagen zur Ausbildung von Störlichtbögen kommen.

Um Verletzungen von Personen und Materialschäden durch Störlichtbögen zu reduzieren, ist es bekannt, in der Verteilung von Elektrizität Lichtbogenerkennungseinrichtungen einzusetzen, die vorgeordnete Leistungsschalter zur schnellen Abschaltung veranlassen oder die Vorrichtungen ansteuern, die einen definierten Kurzschluß verursachen, der jedoch für Personen und Anlage unschädlich ist. Die Dauer des Lichtbogens ist auf diese Weise um bis zu einem Zehntel, teilweise auch mehr, reduziert, so daß große Schäden vermieden und das Ausmaß der Nutzung der Schaltanlage erhöht werden können.

Der Lichtbogen erzeugt einen Licht- Druck- Hitze- und Geräusch-Effekt. Es ist bekannt, jedes dieser Effekte zur Detektion des Lichtbogens zu verwenden.

Durch die DD 271 397 A1 ist eine Einrichtung zur Erkennung von Störlichtbögen in gasisolierten Anlagen bekannt geworden, die im wesentlichen die von der Bogensäule ausgehende Wärmewirkung des Lichtbogens zur Erkennung nutzt. Hierbei ist ein Lichtwellenleiter mit einer Lichtquelle an dem einen Ende und ein photoelektrisches Bauelement an dem anderem Ende an den Betriebsspannung führenden Teilen anliegend angebracht. Die optischen Eigenschaften des Lichtwellenleiters werden durch die Wärmeeinwirkung verändert, wodurch eine Minderung der Intensität des empfangenen Signals bzw. eine Unterbrechung des Signals eintritt.

Durch eine Lichtundurchlässige ummantellung kann zwar die Einwirkung von Streu- und Fremdlicht in Niederspannungs-Schaltanlagen wirksam verhindert werden, durch glühende Teilchen kann aber der Lichtwellenleiter, insbesondere durch die Ummantellung, abbrennen und beschädigt werden noch bevor eine Fehlermeldung eintritt.

Aus der SU-A-760 230 ist es bei Leistungsschaltern bekannt, Hallsensoren zu verwenden. Problematisch bei Schaltanlagen ist jedoch, daß der Entstehungsort eines Störlichtbogen nicht vorher bekannt ist. Zusätzlich können bei Niederspannungs-Schaltanlagen Betriebsströme von bis zu mehreren tausend Ampere fließen, die bei Hallsensoren eine Aktivierung bewirken könnten.

Zur Erkennung von Fehlern ist aus der US 2,224,320 ein Spulensystem bekannt geworden. Dieses Erkennungseinrichtung ist bei heutigen Schaltanlagen mit vertretbaren Aufwand nicht realisierbar.

Aufgabe der Erfindung ist es deshalb, eine Einrichtung nach dem Oberbegriff des Anspruches 1 zu schaffen, die einen Störlichtbogen sicher erfaßt und insbesondere zur Erkennung von Störlichtbögen an Sammelschienen von Niederspannungs-Schaltanlagen geeignet ist.

Die Aufgabe der Erfindung wird durch die kennzeichnenden Merkmale des Anspruches 1 gelöst, während in den Unteransprüchen besonders vorteilhafte Weiterbildungen der Erfindung gekennzeichnet sind.

Eine kompakte Bauweise wird dadurch erzielt, daß der Hallsensor in einem Chip integriert ist.

Besonders günstig ist es, um Störlichtbögen sicher zu erkennen, wenn der Hallsensor ein digitaler Hallsensor ist.

Damit ein Störlichtbögen an Stromsammelschienen zuverlässig erkannt werden kann, ist der Hallsensor zwischen zwei Stromsammelschienen angeordnet.

Um eine hohe Auslösesicherheit zu erreichen, ist es ferner von Vorteil, wenn der Hallsensor im Abstand von einigen Zentimetern, beispielsweise 2-10, zu den Betriebspannung führenden Anlageteilen (Stromsammelschienen) angeordnet ist und der Hallsensor mit seiner Oberfläche parallel zu den Betriebspannung führenden Anlageteilen (Stromsammelschienen) angeordnet ist.

Eine günstige Anordnung zur Verhinderung von Fehlauslösungen durch Betriebsströme ergibt sich, wenn mindestens ein Hallsensor so zwischen den Stromsammelschienen angebracht wird, daß dieser gleichzeitig mit seiner Längsseite innerhalb der Breite der Abgangsschienen positioniert ist.

Zur Erkennung von Störlichtbögen im Bereich der Abgangsschienen ist es vorteilhaft, daß mindestens ein Hallsensor zwischen den Abgangsschienen positioniert wird.

Damit zwei unterschiedlich physikalische Effekte zur Detektion herangezogen werden und somit eine besonders Fehlauslösungsarme Detektion möglich ist, ist ein weiterer Detektor bestehend aus einem Lichtwellenleiter, einem Lichtsender am Anfang des Lichtwellenleiters und einem Lichtempfänger am Ende des Lichtwellenleiters angeordnet. Weiterhin ist der Lichtwellenleiter in unmittelbarer Nähe oder um spannungsführende Teile angeordnet, wobei das Licht des Störlichtbogens durch die Ummantellung des Lichtwellenleiters eingekoppelt wird und diese Lichteinkopplung eine Erhöhung des Ausgangssignals bewirkt.

Schutz vor Fremdlicht ist in einfacher weise geboten, wenn eine Ummantelung des Lichtwellenleiters gefärbt ist, so daß diese für die auftrefende Strahlung eine Filterwirkung aufweist und die Ummantellung des Lichtwellenleiters blau oder grün gefärbt ist.

Eine schnelle Erkennung ergibt sich, wenn der Lichtwellenleiter um mindestens eine Stromsammelschiene gewickelt ist.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine Prinzipdarstellung der Einrichtung an einer Sammelschienenanordnung in einer Niederspannungs-Schaltanlage,
- Fig. 2: eine perspektivische Darstellung der Einrichtung an einer Sammelschienenanordnung in einer Niederspannungs-Schaltanlage,
- Fig. 3: eine Darstellung einer Sammelschienenanordnung mit Abgangsschienen und Hallsensoren von vorne,
- Fig. 4: eine Darstellung der in Fig. 3 gezeigten Sammelschienenanordnung von der Seite,
- Fig. 5: eine Einzelteildarstellung Z der in Fig. 4 gezeigten Sammelschienenanordnung,
- Fig. 6: eine Darstellung einer Sammelschienenanordnung mit Abgangsschienen und weiteren Hallsensoren,
- Fig. 7: eine Darstellung der in Fig. 6 gezeigten Sammelschienenanordnung von der Seite und
- Fig. 8: eine Darstellung einer Sammelschienenanordnung mit einem Hallsensor und Lichtwellenleiter als zusätzliche Detektoren.

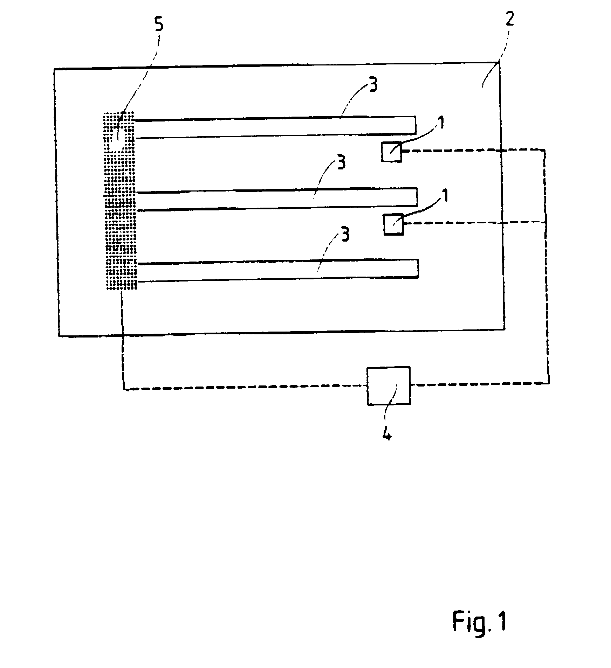

Wie in der Fig. 1 angedeutet ist, sind zwei Hallsensoren 1 in dem Sammelschienenraum 2 einer Niederspannungs-Schaltanlage zwischen den Stromsammelschienen 3 angeordnet.

Das von den Hallsensoren 1 erzeugte Signal wird einer hier nicht näher erläuterten Auswerteschaltung 4 zugeführt, die das Signal verarbeitet und bei einem Störlichtbogen oder einem anderen Querfehler senkrecht zu den Stromsammelschienen 3 ein selektiv arbeitendes Schalt- oder Schutzgerät 5 ansteuert, welches durch schnelle Kontaktöffnung die Wirkdauer des Störlichtbogens verringert.

Ebenso möglich ist anstelle eines Schaltgerätes, eine einen definierten, für die Anlage unschädlichen Kurzschluß erzeugende Vorrichtung zu verwenden.

Die Hallsensoren 1 sind omnipolare, digitale Hallsensoren 1, die ihren schaltzustand ändern, wenn ein Magnetfeld parallel zur Sensoroberfläche in den Wirkungsbereich der Sensoren gelangt. Dabei ändern die Hallsensoren 1 ihren Schaltzustand unabhängig von der Richtung des auf sie wirkenden Magnetfeldes (Nord-Süd oder Süd-Nord-Richtung). Schalten die Hallsensoren beispielweise bei einem Magnetfeld der Nord-Süd-Richtung ein, werden bei Unterschreiten der magnetischen Einschaltflußdichte, z.B. mit Hilfe eines Magnetfeldes der Süd-Nord-Richtung, die Hallsensoren 1 wieder in ihren Ausgangszustand zurück versetzt. Es entsteht ein Rechteckverlauf des Hallsignals.

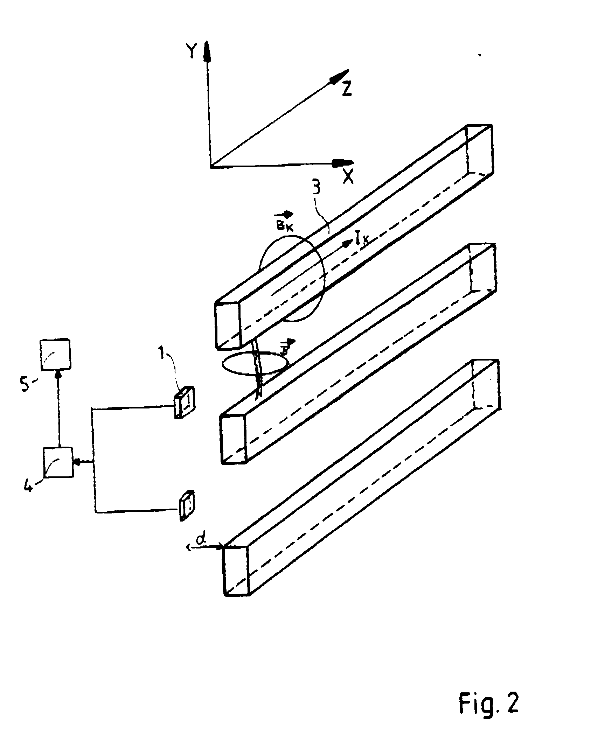

Die Hallsensoren 1 sind wie in der Fig. 2 zu erkennen ist, mit ihrer Oberfläche parallel und im Abstand d von einigen Zentimetern, vorzugsweise drei Zentimetern, zu den Stromsammelschienen 3 angeordnet.

Hierbei sind die Hallsensoren 1 derart angeordnet, daß sie ihren Schaltzustand nur ändern, wenn ein Magnetfeld parallel zu der Y- Z-Ebene des in der Fig. 2 dargestellten Koordinatensystems verläuft.

Zwischen den beiden oberen Stromsammelschienen 3 ist ein Störlichtbogen dargestellt. Das durch den Fehlerstrom verursachte Magnetfeld B verläuft im wesentlichen parallel zur X-Z-Ebene, wodurch dar Hallsensor 1 ein Ausgangssignal erzeugt.

Kurzschlußströme in den Stromsammelschienen, infolge satter Kurschlüsse, sollen dagegen durch die den Lichtbogendetektor nicht erfaßt werden. Der mit Ik bezeichnete Kurzschlußstrom in der obersten Stromsammelschiene 3 erzeugt ein in dem Wirkungsbereich des Hallsensors und in Y- und X-Richtung verlaufendes Magnetfeld, das jedoch kein Ausgangssignal verursacht.

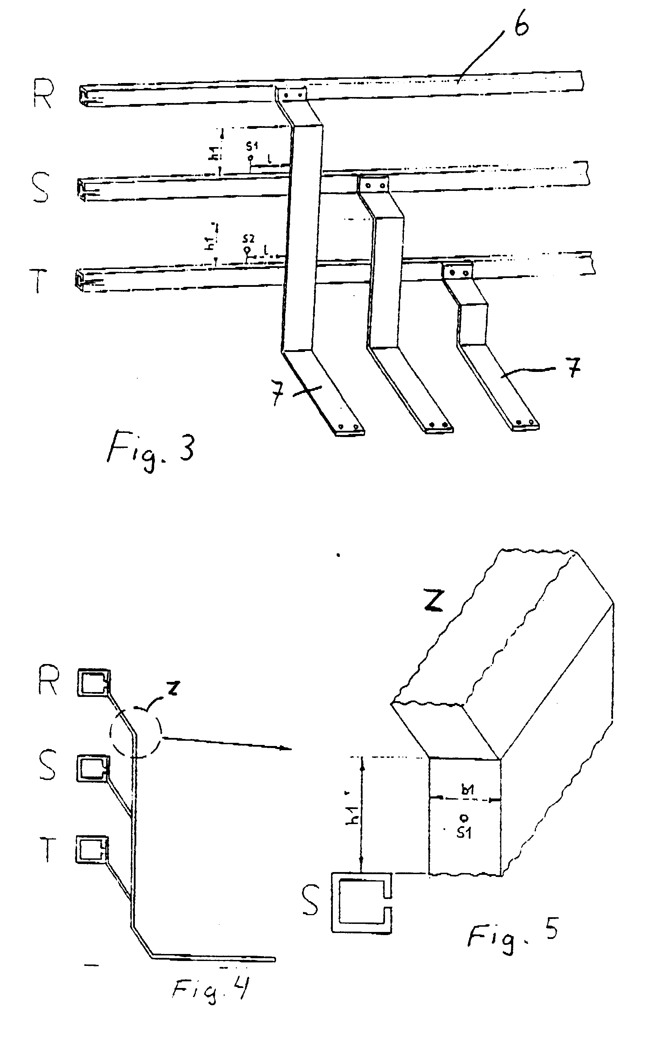

Die Fig. 3 zeigt die Anordnung der Hallsensoren S1,S2 zur Erfassung eines Störlichtbogens an den horizontal angeordneten Hauptsammelschienen 6, ohne daß der Betriebsstrom der vertikal angeordneten Abgangsschienen 7 ein Hallsignal generiert, wobei die Hallsensoren nur angedeutet sind.

Jeder der beiden Hallsensoren S1,S2 wird so innerhalb der Distanz h1, also zwischen den Stromsammelschienen, angebracht, daß sie gleichzeitig mit ihrer Längsseite innerhalb der Distanz bzw. Breite b1 der Abgangsschienen 7 positioniert sind, wobei die Distanz b1 der Stromschienendicke der Abgangsschienen 7 entspricht, wie aus der Einzelheitdarstellung Z in der Fig. 4 dargestellt ist und wobei ferner die Längsseite der Hallsensoren S1, S2 der Arbeitsrichtung entspricht.

Die Entfernung 1 zwischen der Abgangsschiene und dem Hallsensor S1 oder S2 sollte so gering wie möglich sein. Mit dieser Positionierung wird gewährleistet, daß das vom Betriebsstrom in vertikalen Stromschienensystem aufgebaute Magnetfeld in jedem Fall senkrecht den Hallsensor S1 bzw. S2 durchsetzt und damit nicht zur Generierung eines Hallsignals führt. Gleichzeitig durchdringt das Magnetfeld, welches vom Betriebsstrom durch das horizontale Stromschienensystem aufgebaut wird, ebenfalls die Sensoroberfläche im wesentlichen senkrecht.
Die tangentiale Magnetfeldkomponente, die parallel zur Sensoroberfläche wirkt, verläuft senkrecht zur Arbeitsrichtung des Sensors und kann aus diesem Grund auch keine Hallsignalgenerierung initiieren.

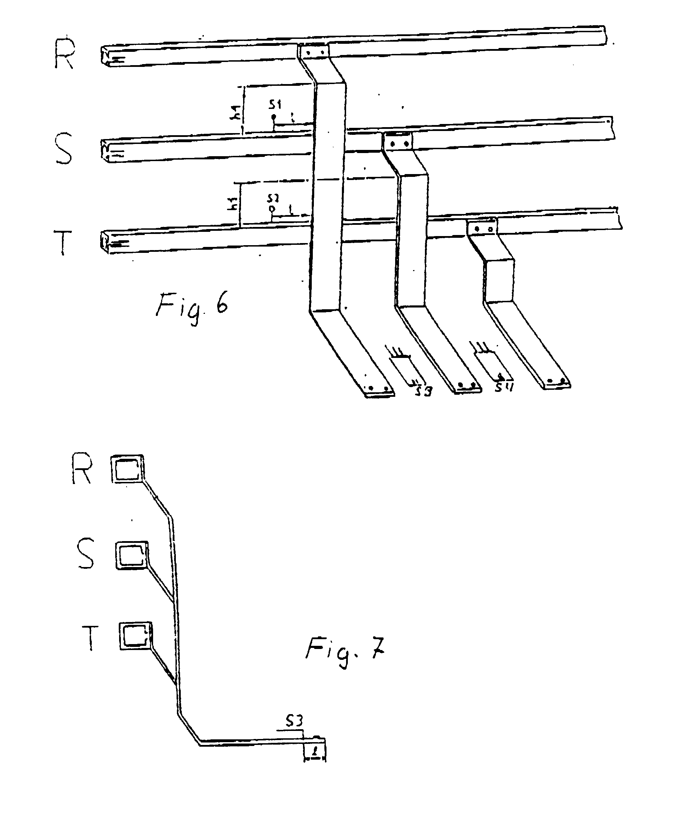

Bei Positionierung der Sensoren gemäß Fig. 3 und Fig. 5 wird durch einen Betriebsstromfluß im horizontalen und vertikalen Stromschienensystem kein Hallsignal von den Sensoren generiert. Nur bei einem Störlichtbogen wird ein Hallsignal erzeugt. Die Tangentialkomponente des durch den Störlichtbogen im horizontalen Sammelschienensystem aufgebauten Magnetfeldes verläuft in diesem Fall parallel zur Arbeitsrichtung des Sensors und überschreitet dessen Einschaltflußdichte.

Durch die Anordnung in der Fig. 3 kann nur ein Störlichtbogen im horizontalen Schienensystem detektiert werden. Deshalb ist es vorteilhaft, ebenfalls im vertikalen Bereich Sensorik einzusetzen. Hierbei werden Hallsensoren S3 und S4 analog zu den Hallsensoren S1, S2 zwischen den Abgangsschienen 7 angeordnet, wie in der Fig. 7 dargestellt ist.

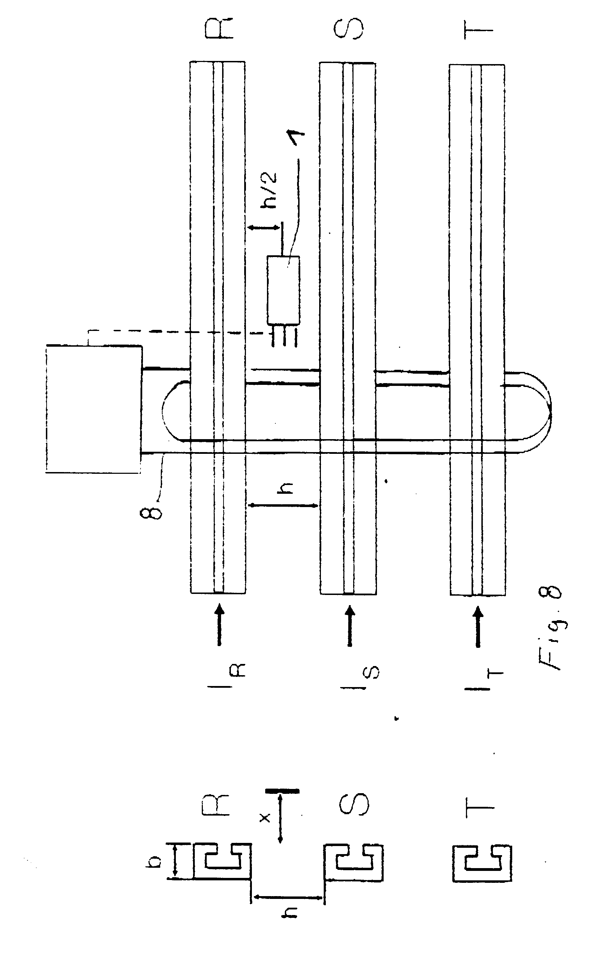

Zur Vermeidung von Fehlauslösungen kann zusätzlich ein Lichtwellenleiter 8 zur Detektion eines Störlichtbogens, gemäß der Fig. 8, angeordnet werden, so daß nur ein Störlichtbogen gemeldet wird wenn beide Sensoren ansprechen.

Im folgenden wird der zusätzliche Detektor mit einem Lichtwellenleiter näher erläutert und zunächst unabhängig vom Hallsensor betrachtet.

Die Einrichtung besteht aus einem Lichtwellenleiter 8, einer elektronischen Schaltung mit einer Leuchtdiode mit konstanten Lichtstrahl bestimmter Wellenlänge am Anfang des Lichtwellenleiters 8 und einem Empfänger am Ende des Lichtwellenleiters 8. Dieser Lichtstrahl wird zur Überwachung der Schutzeinrichtung genutzt. Hierdurch vermeidbare Störungen sind die Drift von Bauelementen und das mechanische Beschädigen des Lichtwellenleiters. Entwickelt sich in dem Sammelschienenraum ein Störlichtbogen, wird dessen Licht in den Lichtwellenleiter durch seine Ummantellung eingekoppelt. Dieses zusätzlich eingekoppelte Licht führt zu einer Anhebung des von einer Auswerteschaltung empfangenen Lichtpegels. Die elektronische Schaltung erzeugt eine dem Lichtpegel proportionale Spannung.
Nach Überschreiten eines an der Auswerteschaltung einstellbaren Schaltpegels wird ein Signal erzeugt, welches von einem selektiv arbeitenden Schutzgerät zum Abschalten des störlichtbogenhavarierten Schaltanlagenteiles oder einer anderen geeigneten Vorrichtung genutzt werden kann. Die Auswerteschaltung befindet sich in einem nicht störlichtbogen gefährdetem Ort.

Der Lichtwellenleiter 8 besteht aus einer Gradientenfaser mit einem Kern von etwa 0,06 mm, einem Mantel von etwa 0,12 mm und einem zweiten Mantel oder Primärschutz bestehend aus einem eingefärbten Acrylat mit einem Durchmesser von etwa 0,25 mm mit einer grünen oder blauen Färbung. Hierdurch weist der Lichtwellenleiter 8 sowohl aus der Sicht der Lichteinkopplung durch Störlichtbögen als auch im Hinblick auf die Unempfindlichkeit gegenüber Fremdlicht günstige Eigenschaften auf. Die mechanische Festigkeit und erforderlichen Biegeradien werden ebenfalls erreicht. Die optische Dämpfung des Lichtwellenleiters beträgt 3 bis 4 Db/km bei 850nm bzw. 0,5 bis 1,5 Db/km bei 1300nm.

Lichtwellenleiter mit einer blauen Ummantelung weisen bei größeren Strömen ein sicheres Erfassungsverhalten auf bei geringer Wahrscheinlichkeit einer Fehlauslösung, während Lichtwellenleiter mit grüner Ummantelung auch noch bei kleineren Strömen, beispielsweise Ik= 4 Ka, die Anforderungen an ein schnelles und sicheres Erfassen erfüllen. Die Lichtwellenleiter mit grüner Ummantelung ist also vorzugsweise im Bereich kleiner Ströme einzusetzen, während die Lichtwellenleiter mit einer blauen Ummantellung bei größeren Strömen sinnvoll ist.

In Niederspannungs-Schaltanlagen als Hauptverteilungen ist aufgrund der größeren zur Verfügung stehenden Kurzschlußleistung und der damit verbundenen großen Fehlerströme vorzugsweise der Lichtwellenleiter mit der blauen Ummantellung einzusetzen. Ein weiterer Aspekt ist, daß in Hauptverteilungen die Schutztechnik sehr zuverlässig arbeiten muß, weil eine Fehlauslösung schwerwiegende Folgen für angeschlossene Geräte haben kann. Deswegen ist die weniger störanfällige blaue Ummantellung hier zu bevorzugen, weil eine geringere Wahrscheinlichkeit einer Fehlauslösung besteht und bei Lichtbogenfehlern in jedem Fall eine ausreichende Strahlungsleistung zur Verfügung steht.

Durch die Verwendung von handelsüblichen Lichtwellenleitern mit einer gefärbten Ummantellung, die bisher lediglich zur Unterscheidung von anderen Lichtwellenleitern in der Signalübertragung vorgesehen war sind zusätzliche Filter nicht erforderlich.

Um eine hohe Anlagensicherheit zu gewährleisten, ist eine zuverlässige Funktion der Erfassungsschaltung erforderlich . Es muß gewährleistet sein, daß bei kleinsten Lichtbogenleistungen die Erfassungseinrichtung sicher anspricht und trotzdem ein ausreichender Störpegel-Nutzpegel eingehalten wird. Eine Fehlauslösung bei zu kleinem Abstand Störpegel-Nutzpegel kann zur Abschaltung wichtiger Verbraucher und ein Nichtansprechen bei zu großem Abstand Störpegel-Nutzpegel zur Zerstörung der Anlage führen.
Damit eine ausreichende Sicherheit vor Störlicht gegeben ist, beträgt der maximale Störpegel in diesem Ausführungsbeispiel mindestens 30 Prozent jedoch höchstens 50 Prozent des Nutzpegels. Eine weitere Vergrößerung des Störanstandes erhöht zwar die Sicherheit vor Störlicht, jedoch wird gleichzeitig die Erfassung von Störlichtbögen erschwert, weil die Schaltschwelle eventuell nicht mehr erreicht wird. Außerdem werden die Erfassungszeiten größer, so daß eine Erfassung im Bereich weniger Millisekunden nicht mehr erreicht ist.

Der Lichtwellenleiter ist in einem Abstand von etwa 50 mm von den Sammelschienen entfernt angeordnet. Sowohl oberhalb als auch unterhalb des Sammelschienensystems weist dieser in etwa den gleichen Abstand auf. Der Abstand kann verringert werden. Der Lichtwellenleiter sollte jedoch nicht direkt auf die Sammelschienen angeordnet werden, weil dort die abschattende Wirkung der Sammelschienen am größten ist.
Günstig ist es auch, den Lichtwellenleiter in einem Abstand anzuordnen, der den Sammelschienenabstand entspricht.

Die Fig. 8 zeigt die Anordnung mit dem drei Stromsammelschienen und einem Lichtwellenleiter 8, der senkrecht zu diesen angeordnet ist und um alle drei Stromsammelschienen gewickelt ist, ohne diese zu berühren. Entsteht ein Störlichtbogen zwischen zwei Stromsammelschienen, kann dieser als linienförmige Strahlungsquelle angesehen werden. Der Lichtwellenleiter 8 liegt dann parallel zu dem Störlichtbogen. Die Strahlung wird radialsymmetrisch abgegeben und trifft den Lichtwellenleiter an geraden oder schwach gekrümmten Stellen. Das hierbei auftrefende Licht wird infolge von mikroskopischen Krümmungen der Lichtwellenleiterachse eingekoppelt. Die auf die Manteloberfläche des Lichtwellenleiters auftrefende Strahlung im Strahlungsmaximum ist durch diese Anordnung hoch im Vergleich zu dem Fremdlicht, so daß bereits in der Entstehungsphase des Störlichtbogens, also im Bereich kleiner 5 ms, eine Erkennung erfolgt. Durch die Filtermirkung der Ummantelung wird dieses Verhalten noch günstiger.

Die Radien der Biegungen des Lichtwellenleiters sind hier und in den nächsten Beispielen im Bereich der Lichteinkopplung relativ groß, beispielsweise größer 40 mm, so daß das Fremdlicht erschwert eingekoppelt wird.

Der Lichtwellenleiter (8) kann, um mindestens drei Stromsammelschienen gewickelt sein, derart, daß pro Windung des Lichtwellenleiters (8) die mindestens drei Stromsammelschienen umfaßt werden und daß der Lichtwellenleiter (8) senkrecht zu den Stromsammelschienen angeordnet ist oder derart, daß pro Windung des Lichtwellenleiters (8) höchstens eine Stromsammelschiene umfaßt wird.

Eine Anordnung ist ebenfalls denkbar, ben der Lichtwellenleiter (8) über weite Bereiche parallel zu den Stromsammelschienen verläuft oder bei der Lichtwellenleiter (8) vor oder hinter den Stromsammelschienen mäanderförming angeordnet ist.

Ein gemeinsamer Lichtwellenleiter kann auch um oder zwischen Feldsamrelschienen oder Stromagbriffen und Hauptsammelschienen gewickelt sein.

## Patentansprüche

1. Einrichtung zur Erkennung von Störlichtbögen, unter Verwendung von Hallsensoren (1,S₁-S₄), insbesondere zur Erkennung an Sammelschienenanordnungen in Niederspannungs-Schaltanlagen, **dadurch gekennzeichnet**, daß der Störlichbogen mittels mindestens eines Hallsensors (1, S₁-S₄) detektiert wird, welcher im Wirkungsbereich des von dem Lichtbogen ausgehenden Magnetfeldes (B) angeordnet ist, daß der Hallsensor (1,S₁-S₄) ein omnipolarer Hallsensor ist, der nur seinen Schaltzustand ändert, wenn ein Magnetfeld parallel zur Sensoroberfläche gelangt und daß der Hallsensor (1, S₁ - S₄) zwischen den Betriebspannung führenden Anlageteilen (3, 7) derart angeordnet ist, daß er bei einem Störlichtbogen zwischen den Anlageteilen (3,7) ein Ausgangssignal und bei Kurzschlußströmen in den Anlageteilen (3,7) kein Ausgangssignal erzeugt.

2. Einrichtung nach Anspruch 1, dadurch gekennzeichnet, daß der Hallsensor (1) in einem Chip integriert ist und daß der Hallsensor (1) ein digitaler Hallsensor ist.

3. Einrichtung nach einem der vorhergehenden Ansprüche, dadurch gekennzeichnet, daß der Hallsensor (1) zwischen zwei Stromsammelschienen (3) angeordnet ist und daß der Hallsensor (1) im Abstand (d) von einigen Zentimetern, beispielsweise 2-10, zu den Betriebspannung führenden Anlageteilen angeordnet ist.

4. Einrichtung nach einem der vorhergehenden Ansprüche, dadurch gekennzeichnet, daß mindestens ein Hallsensor (S1,S2) so zwischen den Stromsammelschienen (R,S,T) angebracht wird, daß dieser gleichzeitig mit seiner Längsseite innerhalb der Breite (b1) der Abgangsschienen (7) positioniert ist.

5. Einrichtung nach einem der vorhergehenden Ansprüche, dadurch gekennzeichnet, daß mindestens ein Hallsensor (S1,S2) zwischen den Abgangsschienen (7) positioniert wird.

6. Einrichtung nach einem der vorhergehenden Ansprüche, dadurch gekennzeichnet, daß ein weiterer Detektor bestehend aus einem Lichtwellenleiter (8), einem Lichtsender am Anfang des Lichtwellenleiters (8) und einem Lichtempfänger am Ende des Lichtwellenleiters (8) angeordnet ist, daß der Lichtwellenleiter (8) in unmittelbarer Nähe oder um spannungsführende Teile angeordnet ist, daß das Licht des Störlichtbogens durch die Ummantellung des Lichtwellenleiters (8) eingekoppelt wird und daß durch diese Lichteinkopplung eine Erhöhung des Ausgangssignals bewirkt wird.

7. Einrichtung nach Anspruch 8, dadurch gekennzeichnet, daß eine Ummantelung des Lichtwellenleiters (8) gefärbt ist, so daß diese für die auftrefende Strahlung eine Filterwirkung aufweist und daß die Ummantellung des Lichtwellenleiters (8) blau oder grün gefärbt ist.

8. Einrichtung nach Anspruch 8 oder 9, dadurch gekennzeichnet, daß der Lichtwellenleiter (8) um mindestens eine Stromsammelschiene gewickelt ist.

## Claims

1. Device for the detection of interfering electric arcs using Hall sensors (1, S₁-S₄), and particularly for detection in bus-bar systems in low-voltage switching plants, **wherein** the interfering electric arc is detected by means of at least one Hall sensor (1, S₁-S₄) which is arranged in the range of effectiveness of the magnetic field (B) originated by the electric arc, wherein the Hall sensor (1, S₁-S₄) is an omnipolar Hall sensor which only changes its switching condition when a magnetic field extends in parallel with regard to the sensor surface, and wherein the Hall sensor (1, S₁-S₄) is arranged between the installation parts (3, 7) that are under operating voltage in such a way that it generates an output signal in the case of an interfering electric arc between the installation parts (3, 7), and that it generates no output signal in the case of short-circuit currents in the installation parts (3, 7).

2. Device as claimed in claim 1, wherein the Hall sensor (1) is included in a chip, and wherein the Hall sensor (1) is a digital Hall sensor.

3. Device as claimed in any of the above-mentioned claims, wherein the Hall sensor (1) is arranged between two bus bars (3), and wherein the Hall sensor (1) is arranged at a distance (d) of a few centimetres, e.g., 2-10, with regard to the installation parts that carry operating voltage.

4. Device as claimed in any of the above-mentioned claims, wherein at least on Hall sensor (S1, S2) is installed in such a way between the bus bars (R, S, T) that it is positioned with its longer side being situated within the width (b1) of the distributing bars (7) at the same time.

5. Device as claimed in any of the above-mentioned claims, wherein at least one Hall sensor (S3, S4) is positioned between the distributing bars (7).

6. Device as claimed in any of the above-mentioned claims, wherein an additional detector is arranged, which detector consists of an optical waveguide (8), an optical transmitter at the beginning of the optical waveguide (8), and an optical receiver at the end of the optical waveguide (8), wherein the optical waveguide (8) is arranged in the immediate proximity of or around of parts that carry voltage, wherein the light of the interfering electric arc is coupled in by the enclosure of the optical waveguide (8), and wherein this light coupling brings about an increase in the output signal.

7. Device as claimed in claim 8, wherein one enclosure of the optical waveguide (8) is coloured in such a way that this enclosure acts like filter for the arriving radiation, and wherein the enclosure of the optical waveguide (8) is coloured in blue or in green.

8. Device as claimed in claim 8 or 9, wherein the optical waveguide (8) is wound at least around one bus bar.

## Revendications

1. Dispositif pour la reconnaissance d'arcs de lumière parasite par application de détecteurs Hall (1, S1-S4), en particulier pour la reconnaissance sur des groupements de barres collectrices dans des installations de distribution à basse tension, **caractérisé en ce que** l'arc de lumière parasite est détecté au moyen d'un détecteur Hall au moins (1, S1-S4), lequel est disposé dans le secteur d'action du champ magnétique (B) partant de l'arc de lumière, en ce que le détecteur Hall (1, S1-S4) est un détecteur Hall omnipolaire ne modifiant son état de commutation que lorsque survient un champ magnétique parallèle à la surface du détecteur, et en ce que le détecteur Hall (1, S1-S4) est disposé entre les pièces de l'installation conductrices de la tension de réseau (3, 7) de telle sorte qu'il produise un signal de sortie pour un arc de lumière parasite entre les pièces d'installation (3, 7), et qu'il ne produise aucun signal de sortie pour des courants de court-circuit dans les pièces d'installation (3, 7).

2. Dispositif selon la revendication 1, **caractérisé en ce que** le détecteur Hall (1) est intégré à une microplaquette et en ce que le détecteur Hall (1) est un détecteur Hall digital.

3. Dispositif selon l'une des revendications précédentes, **caractérisé en ce que** le détecteur Hall (1) est disposé entre deux barres collectrices (3) et en ce que le détecteur Hall (1) est disposé à une distance (d) de quelques centimètres, par exemple de 2 à 10, par rapport aux pièces d'installation conductrices de la tension de réseau.

4. Dispositif selon l'une des revendications précédentes, **caractérisé en ce qu'** un détecteur Hall (S1, S2) au moins est appliqué entre les barres collectrices (R, S, T) de sorte que celui-ci soit en même temps positionné en longueur dans la largeur (b1) des barres de sortie (7).

5. Dispositif selon l'une des revendications précédentes, **caractérisé en ce q u'** un détecteur Hall au moins (S3, S4) est positionné entre les barres de sortie (7).

6. Dispositif selon l'une des revendications précédentes, **caractérisé en ce q u**' est disposé un autre détecteur consistant en un guide d'ondes lumineuses (8), en un émetteur de lumière à l'entrée du guide d'ondes lumineuses (8) et en un récepteur de lumière à l'extrémité du guide d'ondes lumineuses (8), en ce que le guide d'ondes lumineuses (8) est disposé de manière contigue à, ou autour de pièces conductrices de la tension, en ce que la lumière de l'arc de lumière parasite est couplée à l'enrobement du guide d'ondes lumineuses (8) et en ce qu'une élévation du signal de sortie est obtenue par ce couplage de lumière.

7. Dispositif selon la revendication 8, **caractérisé en ce que** l'enrobement du guide d'ondes lumineuses (8) est coloré, de sorte qu'il ait un effet de filtre pour le rayonnement qui apparaît, et en ce que l'enrobement du guide d'ondes lumineuses (8) est coloré en bleu ou en vert.

8. Dispositif selon revendication 8 ou 9, **caractérisé en ce que** le guide d'ondes lumineuses (8) est enroulé autour d'une barre collectrice au moins.
